# EUROPEAN PATENT APPLICATION

(11) **EP 4 741 956 A1**
(43) Date of publication of application: **13.05.2026**
(21) Application number: 24212187.9
(22) Date of filing: 11.11.2024
(51) Int. Cl.: G05B 19/042, G05B 19/418, G06Q 50/04

(54) **METHOD FOR CONFIGURING A SYSTEM CONFIGURATION OF AN INDUSTRIAL CONTROL SYSTEM OF AN INDUSTRIAL PLANT**

(71) Applicant: ABB SCHWEIZ AG, 5400 Baden (CH)
(72) Inventor: GRUENER, Sten, 69514 Laudenbach (DE); TROSTEN, Anders, 724 76 Västerås (SE)
(74) Representative: Maiwald GmbH

(57) **Abstract**

The disclosure relates to a computer-implemented method (100) for configuring an industrial control system, ICS, system configuration (15) of an industrial control system, ICS, (10) of an industrial plant, the method (100) comprising:
- obtaining trigger data indicative of a request and/or a requirement to configure the ICS system configuration (15);
- obtaining configuration data indicative of instructions for configuring the ICS system configuration (15), the configuration data being obtained based on the trigger data;
- obtaining approval data indicative of an approval of the configuration data by at least one approved user (1) of the ICS (10); and
- configuring the ICS system configuration (15) based on the configuration data and the approval data.

## Description

### TECHNICAL FIELD

The present invention relates to a computer-implemented method for configuring a system configuration of an industrial control system of an industrial plant, one or more computer program products, and a data processing system.

### BACKGROUND

Industrial Control Systems, ICS, include a combination of hardware and software for a wide range of applications of industrial plants. These applications include but are not limited to mining extraction, transportation and processing, chemical manufacturing plants, water and wastewater treatment, electric power generation plants, and pharmaceutical processing facilities. ICS are engineered to oversee and manage industrial equipment and processes for the specific application.

ICS typically comprise a Distributed Control System, DCS, which is typically formed by a software executed on one or more computers or, in other words, a computerized system that automates the existing industrial equipment in the industrial plant, which may typically be used in continuous and/or batch processing. Further, ICS typically include several devices such as but not limited to field devices or industrial equipment (e.g., a sensor-actor-machine, machine controllers, etc.), edge devices (e.g., based on Unified Architecture, UA), and cloud servers. These different devices together with the DCS typically form the ICS used to oversee and manage the industrial plant. Generally, the ICS may include software and hardware throughout some or all levels of the automation pyramid, including Information Technology, IT, and Operation Technology, OT, level.

Configuration of the ICS, including the DCS and the systems or devices around it, e.g., industrial edges and field devices, is currently done through manual interactions and on an individual basis for each system or device, which is not only time-consuming but also error prone. Besides efficiency improvements with respect to process-related DCS configurations like generating a control application, defining function blocks, managing alarms etc., there is also a need for the automation of the system configuration of the ICS itself, like exposing signals from the DCS to upper layers of the automation pyramid, asset management tasks, setting up proper access rights for users within the system or updating the software versions within components of the DCS.

One driver for such an extended configuration needs is the advent of NAMUR Open Architecture, NOA, defining dedicated read and write channels from and into the DCS, which needs to be engineered effectively in addition to the existing control application (which is written in, e.g., in some languages defined in IEC 61131-3).

### SUMMARY

The above problem or need is at least partially solved or alleviated by the subject matters of the independent claims of the present disclosure, wherein further examples are incorporated in the dependent claims.

According to an aspect of the present disclosure, there is provided a computer-implemented method for configuring an industrial control system, ICS, system configuration of an industrial control system, ICS, of an industrial plant, the method comprising:
- obtaining trigger data indicative of a request and/or requirement to configure the ICS system configuration;
- obtaining configuration data indicative of instructions for configuring the ICS system configuration, the configuration data being obtained based on the trigger data;
- obtaining approval data indicative of an approval of the configuration data by at least one approved user of the ICS; and
- configuring the ICS system configuration based on the configuration data and the approval data.

Accordingly, the method may first be triggered by obtaining trigger data. The trigger data may for example be obtained when there is a request to configure the system configuration of the ICS or, in other words, the ICS system configuration. Such a request may be from a user of the ICS, e.g., using hardware input means of the ICS, such as a computer mouse, keyboard, or similar for providing a user input indicative of the request to configure the ICS system configuration. In this regard, configuring the ICS system configuration may have several meanings such as but not limited to writing, deleting and overwriting data. In particular, the ICS system configuration may be updated, re-configured, newly configured and so on by configuring it. For example, the user may be an administrator or generally a user having the right to grant certain access rights to other users. In this case, such user may want to change or set up access rights for other users of the ICS, which is why they need to configure or reconfigure the system configuration of the ICS. Specifically, they may need to add new users with their data and access rights to the ICS system configuration, which may in particular include writing new data on several levels or into systems or devices of the system configuration of the ICS. Alternatively, or additionally, for example, the trigger data may be obtained when there is a requirement to configure the system configuration of the ICS. Such requirement may for example occur when there is a certain or unusual, e.g., erroneous, system configuration state. Such state may for example but not limited thereto be an obsolete software component, an update or changes of hardware of the ICS. In these cases, to resolve the unusual or erroneous state of the system configuration, the trigger data may be generated and indicate the requirement to resolve the state. Of course, the trigger data may also indicate or comprise the state, e.g., specify the error or unusual state, besides indicating that it should be resolved. In other words, there may be a requirement for a new configuration or re-configuration of the system configuration of the ICS.

Consequently, in the method, configuration data indicative of instructions for configuring the ICS system configuration may be obtained. These instructions may accordingly specify in which way or how to configure, e.g., re-configure, the system configuration of the ICS. Because the configuration data is being obtained based on the trigger data, the configuration data is specifically obtained to configure the ICS system configuration in a way which aims to resolve the request and/or requirement. In other words, the configuration data may be obtained such that it answers to the request of the user, e.g., by granting the requested access rights in the ICS system configuration, and/or to the requirement, in particular to resolve the unusual or erroneous state of the system configuration, e.g., by updating or replacing the obsolete software. The configuration data may partially or fully automatically be obtained based on the trigger data. This means that no or just some human action may be required to obtain the configuration. Instead, based on the trigger data, the method may at least partially or fully automatically obtain the configuration data that resolves the request and/or requirement indicated by the trigger data.

Consequently, in the method, approval data indicative of an approval of the configuration data by an approved user of the ICS may be obtained. For this purpose, the obtained configuration data may be indicated to one or more approved users of the ICS, e.g., on a computer display or any other user interface of the ICS. For example, a prompt to approve or disapprove the configuration data may be displayed to a user of the DCS on a computer thereof. A user being approved means that the user has at least the right to access the ICS and/or approval rights to approve that the ICS system configuration is configured. For this purpose, the user may for example be required to authenticate themselves at the ICS, e.g., by using login data (e.g., username and password) or any other authentication means such as but not limited to fingerprint authentication, face authentication, iris authentication, mobile phone, smartcard or similar. In particular, the user may be approved such that they may have the right to approve the configuration data to be applied for configuring the ICS system configuration. The user may for example be a control engineer or technician of the industrial plant.

In any case, the approval of the configuration data by at least one approved user of the ICS, which may consequently generate the approval data obtained during the method, ensures that only user approved configuration data is consequently being executed to configure the ICS system configuration. While the configuration data can be automatically obtained based on the trigger data, it will not be executed unless the at least one approved user approves it. Hence, the approval of the configuration data adds an additional layer of safety before applying the configuration data. Through the approval, the at least one approved user may determine the properness of the configuration data before having it executed. This prevents or at least reduces situations in which the system configuration of the ICS is configured or, in other words, modified in a way which could or would negatively affect the ICS. This is particularly relevant in industrial plants because false or erroneous configuration may lead to security risks or errors, which could result in partial or full standstill of the industrial plant with significant consequences.

Consequently, the ICS system configuration is only configured when the approval data is obtained and indicates the approval by the at least one approved user. Specifically, the approval data may only be obtained when the approval of the configuration data was given by at least one or more approved users according to the approval right required for the configuration data and/or the ICS, which may be indicated by the configuration data and/or the ICS. Otherwise, the approval data may not be generated. Instead, disapproval or error data may be generated, which may be shown to the user which tried to approve the configuration data, and which may indicate that the user has not the required approval right to approve the configuration data and/or the approval right or approved user that is required to approve this particular configuration data. Accordingly, if an approved user aims to approve the configuration data without having the required approval right, instead of approval data, disapproval data may be obtained.

Moreover, the configuring of the ICS system configuration is based on the configuration data, which means that the obtained configuration data is used to configure the ICS configuration system. The configuring of the ICS configuration system may generally include any modifications, deletions and/or additions to the ICS configuration system, on a software level and/or a hardware level of the ICS.

With the method of the first aspect of this disclosure, a system configuration of the ICS may be configured without requiring instructions to be provided manually from a user configuring different components of the ICS individually and with a significantly reduced risk of errors. Instead, configuration data may be obtained based on trigger data, which allows to configure the system configuration, in particular in an at least partially automated way, where the instructions for configuring the system do not need to be manually provided by a control engineer or technician. Still, the instructions may be supervised before being approved such that it is ensured that these do not negatively affect the ICS.

The method of the first aspect may in particular be an at least partially or fully computer implemented method. This means that at least one, multiple or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system. For example, the steps of obtaining of the trigger data, obtaining of the configuration data, obtaining of the approval data and configuring of the system configuration may all be performed by the industrial control system, in particular a data processing system thereof. The data processing system may be a Distributed Control System, DCS, which may for example comprise one or more data processing apparatuses.

Generally, the ICS may comprise a DCS which may be formed by a software executed on a data processing system or, in other words, may be a data processing system with a software executed thereon. The software executed on the data processing system may be automating the industrial equipment in an industrial equipment, in particular used in one or more continuous processes and/or a batch processes, of the industrial plant. Further, the ICS may include several devices such as but not limited to field devices or industrial equipment (e.g., a sensor-actor-machine, machine controllers, etc.), edge devices, cloud servers (e.g., Unified Architecture, UA, servers) and/or similar. These different devices together with the DCS may form the ICS, which may be used by users, such as control engineers and technicians, to oversee and manage the industrial plant. Generally, the ICS may include software and hardware throughout some or all levels of the automation pyramid.

In an example, the configuration data may comprise a playbook instance, which may comprise the instructions for configuring the ICS system configuration as actions or, in other words, tasks, in particular on an information technology, IT, level and an operation technology, OT, level of the ICS. Generally, a playbook may be understood as a repeatable, reusable configuration management software. Such playbook may be configured with actions or tasks for configuring an IT level system on multiple devices of the IT level system. Hence, if a task may need to be executed more than once, e.g., for granting user access rights for several users over time, the playbook can advantageously be used every single time. In particular, the playbook can be used to push out a new configuration or confirm the configuration of several devices within the system. Generally, the playbook instance refers to an instance of a playbook, which is consequently used to be executed for configuring the ICS system configuration. Generally, a playbook or playbook instance may have several "plays", which may equate the actions or tasks that are to be carried out on the system. The playbook or playbook instance may further include a sequence or order of these plays or actions or tasks. In the present case, a playbook instance may be used for configuring the ICS system, where the playbook instance contains the instructions for configuring the ICS system as plays, actions, or tasks. Advantageously, the playbook instance is not limited to the IT level of the ICS but can also execute or perform actions or tasks for configuring the ICS on the OT level. This means, for example, that the playbook instance may configure the DCS of the ICS on the IT level and, additionally, configure one or more field devices, one or more edge devices and/or one or more cloud servers on the OT level of the ICS. Accordingly, the playbook instance allows to configure the entire ICS system throughout all systems and devices of the IT and OT level or domain of the ICS. Hence, there is no need to manually configure each one of the systems and devices of the entire ICS system on each level or domain.

In an example, a playbook template for the playbook instance may be selected from a playbook template repository based on the trigger data, wherein the playbook template repository comprises multiple predefined playbook templates. Accordingly, the repository may contain several predefined or, in other words, previously generated playbook templates available for selection by the method. Generally, a playbook template is a reusable template of a playbook for a playbook instance to be used to resolve a request and/or a requirement to configure the ICS system configuration at a particular event or point in time. In other words, the template is the reusable part of a playbook, which may be configured specifically to resolve a certain request and/or a requirement to configure the ICS system configuration. The playbook instance, on the other hand, is the instance of the playbook that is based on the template and being used for configuring the ICS system configuration. Specifically, the method may comprise the step of selecting the playbook instance from the repository based on the trigger data. The step of selecting the playbook template may precede the step of obtaining the configuration data. This allows to obtain the playbook instance from specifically that playbook template out of many playbook templates, which can solve the request and/or requirement configuration of the ICS system configuration (e.g., changing user access rights), while many different playbook templates are available with different actions, e.g., for changing user access rights, for updating software, for configuring new hardware, etc. Also, this allows to obtain the optimal template instance rather quickly, which is particularly advantageous when the configuring of the ICS system configuration is required due to an error or unusual state of the ICS system configuration. Also, no manual effort is required to individually determine the instructions or actions to configure the ICS system configuration. Rather, these are already included as predefined plays or actions in the playbook template.

In an example, the playbook template may be selected using a generative artificial intelligence, GAI, model, the GAI model in particular using a retrieval augmented generation, RAG, technique. Generally, the GAI model may be pre-trained for selecting playbook templates from the repository and/or may be trained on the fly or, in other words, during use. Generally, the GAI model allows to select the required or best playbook template out of the available predefined playbook templates based on the trigger data in a quick manner. One particularly advantageous way to implement the selection of the playbook template is the application of RAG technique or patterns. Here, the user, e.g., the approved user or any other user of the ICS, in particular the DCS, may be chatting with the GAI model to select or retrieve the best playbook template for their request and/or requirement or, in other words, the trigger data. An exemplary flow using RAG technique may start with an interactive user chat, where a user of the ICS is asked to describe their problem with the ICS. For example, the user may enter "I would like to check if all the software components of my DCS are up to date" or "I would like to expose the value of the setpoint of Reactor R11 via the edge device". Assuming the user enters "I would like to expose the value of the setpoint of Reactor R11 via the edge device". Based on user input, and the predefined playbooks from the repository, most appropriate playbooks may be selected by the GAI model. Moreover, historical logs of "successful" or "not successful" applications of certain playbooks in certain situations of the ICS may be considered by the GAI model. For example, the user may enter "Was the playbook able to resolve similar issues?" or observe the previous system configuration. Also, additional user input may be extracted via the chat function. Alternatively, a fully manual selection of the playbook template out of the repository can be employed.

In an example, the playbook instance may be based on the selected playbook template, which is loaded with playbook parameters for the ICS system configuration and the actions for configuring the ICS system configuration are parametrized based on the playbook parameters. Specifically, after selecting the playbook template, the method may load the playbook parameters for the playbook template, thus generating the playbook instance from the selected playbook template and the playbook parameters. The actions (or plays or tasks) included in the selected playbook template are parametrized with the playbook parameters for the ICS system configuration, which may depend on the trigger data and/or on the (current) ICS system configuration. For example, the playbook template may be a sequences of actions, in particular parameterized actions. Such a parametrized action may for example be "connect to an OPC UA server with endpoint {opc_ua_endpoint}", or "write a value {value} in a variable node with id {opc_ua_node_id}". In this example, the actions are exemplary specified in markup language. These parametrized actions now need to be loaded with the playbook parameters, in particular playbook parameter values. In the above example, a loaded playbook parameter in the action may be [opc_ua_endpoint="tcp.opc://192.168.1.1 :62541"]. In this example, the playbook template with the filled-in parameters or values is a playbook instance. This playbook instance can be parsed by a workflow engine. The workflow engine may be executing the playbook instance for configuring the ICS system configuration.

In an example, the playbook parameters may be determined using a generative artificial intelligence, GAI, model, the GAI model in particular using a retrieval augmented generation, RAG, technique. Generally, the GAI model may be pre-trained for selecting playbook templates from the repository and/or may be trained on the fly or, in other words, during use. Generally, the GAI model allows to determine the playbook parameters required to resolve the request and/or requirement. One particularly advantageous way to implement determination of the playbook parameters is the application of RAG technique or patterns. Here, the user, e.g., the approved user or any other user of the ICS, in particular the DCS, may be chatting with the GAI model to determine the playbook parameters. In this case, the user may use queries to the GAI model, which may be based on a Large Language Model, LLM, to determine the playbook parameters or their values. The GAI model may be the same or a different one than a GAI model for the selection of the playbook template. For example, a play or action in a playbook template may be "Expose {parameter} of the DCS via the edge device". To configure the ICS system configuration, the proper parameterization of the playbook template in the example needs to be known. Accordingly, the name of the variable to be exposed in the ICS system configuration is required. To determine or retrieve this playbook parameter (value), for example, the GAI model based on the LLM can be prompted to perform a number of Application Programming Interface, API, calls on the ICS system configuration. For example, the GAI model can be requested to prompted to list available tag names, select tag names out of the and propose them to the user. Alternatively, a fully manual determination of the playbook parameters can be carried out.

In an example, a playbook template for the playbook instance is generated using a generative artificial intelligence, GAI, model, based on the trigger data, the GAI model in particular using a retrieval augmented generation, RAG, technique. The GAI model may be the same or different from the other GAI models mentioned herein. Accordingly, the playbook template may also be generated specifically based on the trigger data and hence, for the instance of the request and/or requirement for configuring the ICS system configuration. This may be advantageous when no predefined playbook template is available in the repository, which resolves the request and/or the requirement. However, it may also be advantageous to generate the playbook templates in the repository using the GAI model. For example, the proposal of completely new playbook templates may be based on available primitives (or application targets) which playbooks can operate on. An example can be troubleshooting of some networking issues within nodes of the DCS. Here, the GAI model based on LLM can determine a possible solution like "Re-Acquiring DHCP lease from the DHCP server" from its pre-trained knowledge. Then, a suitable playbook operation is looked up based on the RAG technique by scanning the available exposed actions with the playbook and its documentation, for example calling the task: network.host_re-aquire-dhcp({dhcp_server_hostname}). Under supervision of the user, a playbook template is created containing this primitive. Also, this step may be executed to locate the actual "dhcp_server_hostname" corresponding to the DHCP server within the current ICS system configuration to execute the playbook instance.

In an example, the method may further comprise checking the playbook instance before configuring the ICS system configuration. The checking may be including one or more of: a syntax check of the playbook instance, applying a predefined rule set of one or more checks to the playbook instance, and a combability check of the compatibility of the playbook instance with one or more constraints and/or one or more states of the ICS system configuration. Advantageously, such checks or pre-checks prior to configuring the ICS system configuration can, in addition to the approval data, ensure that the ICS system configuration is not configured in a false or erroneous way. For example, by checking the syntax of the playbook instance, the correctness of the playbook instance can be checked before this provokes an error at the ICS system configuration during the configuring of the ICS system configuration. Further, for example, a predefined rule set may be applied, which can for example include more-fine grained checks, e.g., a manual approval may be needed while wiring to some Open Platform Communications Unified Architecture, OPC UA, server or device. Also, the whole playbook instance may also be rejected due to violation of some predefined constraints of the ICS system configuration, e.g., writing a variable of a node which is not within a particular allowed range. Alternatively, or additionally, the playbook instance may also be rejected based on the current state of the system, e.g., operating software, OS, updates may not be applied while a critical process is running within the industrial plant. Checking for compatibility with the restraints and/or states of the ICS system configuration or industrial plant in general prior to the configuring step hence allows to avoid such rejections and apply only template instances which are compatible and during an acceptable state of the industrial plant or ICS. Generally, a GAI model may be also used for the proposition of approved users or approval permissions of users, e.g., different approval roles, and in the proposition of the predefined rule set.

In an example, the system configuration of the ICS may be configured across a distributed control system, DCS, of the ICS and one or more of: at least one field device, at least one edge device, and at least one cloud server of the ICS. In particular, the system configuration of the ICS may be configured across three or more or all of the aforementioned parts or components of the ICS. For this purpose, the configuration data may accordingly be configured with specific instructions for all these systems or devices of the ICS. In particular, the playbook instance may have actions for all of these systems or devices of the ICS. This significantly simplifies the configuration process of the system configuration because no manual configuration of all different systems or devices of the ICS is required. For example, when updating the system configuration of the ICS or creating a new user for the ICS, the instructions may be updating the ICS throughout all and/or creating the user on all field devices, edge devices, cloud server and DCS. Specifically, the configuration can be done throughout all levels of the automation pyramid. Also, the configuration can be done for Information Technology, IT, as well as Operation Technology, OT, systems or devices of the ICS.

In an example, the approval data may be obtained after checking approval requirements of the configuration data and/or the ICS system configuration against an approval permission of the at least one approved user. Generally, there may be several approved users. Each of these approved users may have the same, similar or different approval permissions for approving the configuration data to be consequently executed on the ICS for configuring its system configuration. Different approval permissions may be required for different configurations of the ICS system configuration. Also, approval from multiple or all of the users may be necessary depending on the configuration to be performed on the ICS system configuration. Such approval of several users may vary according to the configuration data. For example, for large, special, certain or sensitive configurations, an approval of two or more users or one or more specific users with specific approval permission may be required. On the other hand, for small, usual or unsensitive configurations, the approval of one user or a user with normal approval permission may be sufficient. Accordingly, different approved users may have a different approval permissions. Which approval permission is required to approve the configuration data may for example be defined in the configuration data itself and/or within the ICS or ICS system configuration by approval requirements. By checking the approval requirements against the approval permissions of the one or more approved users when receiving their approval, it may be checked whether or not the approvals given are sufficient to generate the approval data, which is consequently obtained in the method. If the approval requirements are not met by the approved user(s) trying to approve the configuration data, e.g., the template instance, instead of approval data, error data or disapproval data may be generated. This ensures that significant changes of the ICS system configuration can only come from approved users with high approval permission and/or from multiple approved users, ensuring that the industrial plant does not take damage, or an industrial process is interrupted due to erroneous configuration data approved by, e.g., a single user with low approval permissions. Generally, the approval requirements may be target-based. For example, if a parameter of a proportional-integral-derivative, PID, controller within the DCS needs to be modified, an approver of group of "process engineer" with specific approval permissions for the particular industrial plant may be needed. Imposed changes in field device configuration may require approvals from some "instrumentation engineers" etc. Furthermore, an additional check might be required based on or the approval permissions may be depending on a size or delta of the proposed change in the ICS system configuration associated with the configuration data. Small parameter deviations might require a smaller list of approvers or generally lower approval requirements compared to large (numerical) or structural changes of the ICS system configuration. Another category of changes by the configuration data may be context-based. Here, it is important to understand in which context the change is happening. One example is the structural content of the target of change, e.g., a change in the safety subsystem needs a different approval or verification procedure compared to a change in the Human Machine Interface, HMI, e.g., on an operator screen. Another example is the temporal context. For example, some changes might not be allowed at night or outside of maintenance windows. Those mechanisms can be encoded in some proprietary database or as vendor-specific properties of existing data sources, like OPC UA server and attributes within. Once the list of needed approvers (approver chain) or approver roles is determined, the actual approval mechanism can vary from sending an email to a notification on a mobile device or HMI screen of the user or operator of a shift for the industrial plant. Additionally, verification of request mechanisms of the DCS may be triggered if values in the process need to be changed.

In an example, the configuration data may be indicative of declarative instructions for configuring the system configuration of the ICS. Generally, the instructions may take any form such as programming or scripting language or markup language or any other form. For example, markup language like Extensible Markup Language, XML, or Yet Another Markup Language, YAML, domain-specific language, e.g., Business Process Model and Notation, BPMN, or a derivative of IEC 61131 ST language or scripting language like Python or JavaScript may be used. While generally also imperative instructions or imperative language for the instructions is possible, advantageously declarative instructions are being used, by means of which even complex objectives or tasks can be described in an easy to read or understand manner for a user. Accordingly, the user may easily check the instructions. Further, declarative instructions define what must be accomplished by the configuration in terms of the problem domain, rather than describing how to accomplish the configuration of the ICS system configuration. Instead of imperative instructions, e.g., "increment parameter x by 1", declarative instructions have the form of, e.g., "parameterx should have a value 4". Also, declarative instructions define the configurations (e.g., conditions, settings, etc.) of the ICS system configuration that is to be taken independent from the current configurations, whereas imperative instructions would consider the current configurations. This enables to apply even complex configurations in a simple manner independent from the current configuration. No assumptions about a previous ICS system configuration state are needed. In terms of playbook instances, the therein contained plays or actions may be declaratively phrased. Further, the instructions or plays or actions may be idempotent. In this way, the instructions or actions describe the desired state of the system and always deliver the same result.

In an example, the instructions of the configuration data may be transformed into computer-executable code by a generative artificial intelligence, GAI, model. Specifically, the method may comprise a step of transforming the instructions into computer-executable code. This step may be carried out after obtaining the configuration data and/or after obtaining the approval data and before the configuring of the ICS system configuration, for which the computer-executable code may be used. As mentioned, the configuration data with its instructions does not have to be provided as a computer-executable script or program language but may also be provided in other form, e.g., as markup language, for the advantages described above, e.g., easy understanding by a user. In this case, the language or form of the configuration data may be transformed into computer-executable code for carrying it out by the ICS. Specifically, different code may be required for each one of the DCS, field devices, edge devices, cloud servers etc. depending on their operating software or programming. Advantageously, a generative artificial intelligence, GAI, model, e.g., based on one or more LLMs, may be used to transform the language or form of the configuration data, e.g., in markup language, into computer-executable code or script, in particular specifically for each one of the DCS, field devices, edge devices, cloud servers or generally according to the requirements of the systems and devices of the ICS and depending on the systems and devices of the ICS which are to be configured within the ICS system configuration. Accordingly, the GAI model does not only have the advantage that it generally provides the computer-executable code but also that it can provide the specific script or code language required at the different systems or devices of the ICS.

In an example, the method may further comprise logging the ICS system configuration before configuring the ICS system configuration based on the configuration data and the approval data. In other words, the ICS system configuration, specifically a current version thereof before its configuring based on the configuration data and the approval data, may be logged. This means that at least the information of the ICS system configuration is logged, which will be impacted or changed by the consequent configuring of the ICS system configuration. Also, a fully logging of the information of the ICS system configuration is possible. For logging, a snapshot of the current ICS system configuration may be taken, for example. Also, some or more of the data or information of the current ICS system configuration may be stored. Advantageously, a log of configurations of the ICS system configuration over time may be generated. The logging is particularly advantageous when using declarative instructions because with declarative instructions it is not possible to retrace the changes of the ICS system configuration that were done through the configurations over time. Specifically, to the in general unknown state of the ICS system configuration, no trivial rollback of an applied playbook instance may be possible, and needs to be engineered in a case-by-case manner depending on the applications or for dedicated playbooks. Hence, when using a log or audit log system, the previous state of the ICS system configuration may be restored. With the log, it is possible to see how the ICS system configuration has been before later configuring steps. This enables that the ICS system configuration can be rolled back. This means that an earlier ICS system configuration can be configured or, in other words, it can be returned to an earlier ICS system configuration, in particular independent from the lack of traceability with declarative instructions despite their advantages. In an example, the method, after configuring the ICS system configuration based on the configuration data and the approval data, may further comprise rolling back the ICS system configuration based on the logged ICS system configuration.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure. The data processing system may for example be the DCS or any other device or system of the ICS or a data processing system in addition to the DCS or generally the ICS.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

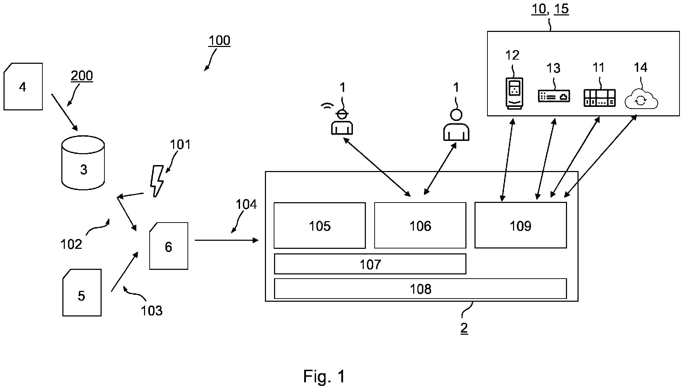

Exemplary embodiments will be further described with reference to Figure 1, which shows a method 100 for configuring a system configuration of an industrial control system 10 using a workflow engine 2.

The Figures are schematic only and not true to scale. In principle, identical or like parts, elements and/or steps are provided with identical or like reference numerals in the Figures.

### DETAILED DESCRIPTION OF THE INVENTION

Figure 1 schematically shows an industrial control system, ICS, 10 for controlling an industrial plant (not shown), which may be carrying out one or more industrial processes.

The ICS 10 may include several systems and devices as shown in Fig. 1. For example, the ICS 10 here comprises a distributed control system, DCS, 11, which is a computerized system that automates industrial equipment used in the industrial plant. One such industrial equipment may be a field device 12. As shown in Fig. 1, the field device 12 or several field devices 12 may also be part of the ICS 10. Also, one or more edge devices 13 and/or cloud servers 14 may be part of the ICS 10.

The ICS 10 may have a system configuration, according to which all or some of the DCS 11, field device(s) 12, edge device(s) 13 and/or cloud server(s) 14 may currently be configured. Generally, edge device(s) 13 may be an in particular IT-based processing unit, which may be installed in physical proximity to the OT-system of the industrial plant, e.g., on plant premise, opposed to cloud server(s) 14. For example, the definition of user access rights, software versions, asset management functions and similar may be part of such system configuration 15. It may now be requested or required to configure the current system configuration of the ICS 10 throughout all systems and devices, including all or some of the DCS 11, field device(s) 12, edge device(s) 13 and/or cloud server(s) 14.

For this purpose, the computer-implemented method 100 may be executed on a data processing system (not shown), which may have one or more data processing apparatuses and may or may not be part of the ICS 10, e.g., part of the DCS 11. When executed, the method 100 may configure or, in other words, re-configure the current system configuration 15 based on the request or requirement. The method 100 and the data processing system may use the workflow engine 2 as shown in Fig. 1. Moreover, the steps 101 to 105 and 110 of method 100 as shown in Fig. 1 may also be carried out by the data processing system, e.g., by another workflow engine or the same workflow engine 2.

Specifically, in a step 101 of method 100, trigger data may be obtained, the trigger data being indicative of a request and/or a requirement to configure the ICS system configuration 15. That request may for example be provided by a user 1 of the ICS 10, e.g., when wanting to create new users in the system configuration 15, or by the ICS 10 itself, e.g., due to an error of the industrial plant or generally an error returned by the ICS 10, e.g., the DCS 11 or a field device 12.

The trigger data may trigger, in steps 102 and 103 of method 100, the obtaining of configuration data indicative of instructions for configuring the system configuration 15. The configuration data may be in the form of a playbook instance 6. For obtaining the configuration data in the form of the playbook instance 6, in step 102 of method 100, a playbook template 4 is selected from a playbook template repository 3, the playbook template repository 3 comprising multiple predefined playbook templates 4. Consequently, in step 103 of method 100, the selected playbook template 4 is loaded with playbook parameters 5 for the ICS system configuration 15 and the instructions in the form of plays or actions of the playbook instance 6 to be performed for configuring the system configuration 15. The playbook template 4 here is parametrized based on the playbook parameters 5. Thereby, the playbook instance 6 is obtained.

In a step 104 of method 100, the playbook instance 6 is consequently supplied to the workflow engine 2 for execution. The parametrized actions or instructions of the playbook instance 6 may be provided in declarative language and as simple markup language, for example. Therefore, at, before or after step 104, the instructions or actions of the playbook instance 6 may be transformed into computer-executable code, e.g., by a generative artificial intelligence, GAI, model.

The workflow engine 2 may carry out several steps 105 to 109 of method 100. For example, in step 105, a syntax check may be performed on the instructions or actions of the playbook instance 6 before applying these on the system configuration 15 of the ICS. Additionally, an approval by one or more approved users 1 of the ICS 10 may be obtained in step 106. When approved, approval data indicative of the approval of the playbook instance 6 may be obtained at step 106. Also, at step 107, a predefined rule set of one or more checks may be applied to the playbook instance 6. Additionally, or alternatively to step 107, a combability check of the compatibility of the playbook instance 6 with one or more constraints and/or one or more states of the ICS system configuration 15 may be carried out. Further, at step 108, a logging of the ICS system configuration 15 before configuring the ICS system configuration 15 based on the playbook instance 6 may be carried out.

Consequently, in particular after steps 106 to 108, the playbook instance 6 may be applied or executed on the ICS system configuration 15, thereby resolving the request and/or requirement indicated by the trigger data. For example, the playbook instance 6 may be based on a playbook template 4 for creating a new user with certain access rights on the ICS 10 among the different systems and devices 11 to 14 and loaded or parametrized with the playbook parameters 5 to access the correct instances of the systems and devices 11 to 14.

Generally, as shown in Fig. 1, by a further method 200 or as part of the method 100, playbook templates 4 may be generated, e.g., using the GAI model, which may be stored in the repository 3 and consequently be used depending on the request and/or requirement to configure the system configuration 15 of the ICS 10.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation.

For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope of the claims.

## Claims

1. A computer-implemented method (100) for configuring an industrial control system, ICS, system configuration (15) of an industrial control system, ICS, (10) of an industrial plant, the method (100) comprising:
- obtaining trigger data indicative of a request and/or a requirement to configure the ICS system configuration (15);
- obtaining configuration data indicative of instructions for configuring the ICS system configuration (15), the configuration data being obtained based on the trigger data;
- obtaining approval data indicative of an approval of the configuration data by at least one approved user (1) of the ICS (10); and
- configuring the ICS system configuration (15) based on the configuration data and the approval data.

2. The method (100) of claim 1, wherein the configuration data comprises a playbook instance (6), which comprises the instructions for configuring the ICS system configuration (15) as actions on an information technology, IT, level and an operation technology, OT, level of the ICS (10).

3. The method (100) of claim 2, wherein a playbook template (4) for the playbook instance (6) is selected from a playbook template repository (3) based on the trigger data, wherein the playbook template repository (3) comprises multiple predefined playbook templates (4).

4. The method (100) of claim 3, wherein the playbook template (4) is selected using a generative artificial intelligence, GAI, model, the GAI model in particular using a retrieval augmented generation, RAG, technique.

5. The method (100) of claim 3 or 4, wherein the playbook instance (6) is based on the selected playbook template (4), which is loaded with playbook parameters (5) for the ICS system configuration (15) and the actions for configuring the ICS system configuration (15) are parametrized based on the playbook parameters (5).

6. The method (100) of claim 5, wherein the playbook parameters (5) are determined using a generative artificial intelligence, GAI, model, the GAI model in particular using a retrieval augmented generation, RAG, technique.

7. The method (100) of any one of claims 2 to 6, wherein a playbook template (4) for the playbook instance (6) is generated using a generative artificial intelligence, GAI, model, based on the trigger data, the GAI model in particular using a retrieval augmented generation, RAG, technique.

8. The method (100) of any one of claims 2 to 7, wherein the method (100) further comprises checking the playbook instance (6) before configuring the ICS system configuration (15), the checking including one or more of: a syntax check of the playbook instance (6), applying a predefined rule set of one or more checks to the playbook instance (6), and a combability check of the compatibility of the playbook instance (6) with one or more constraints and/or one or more states of the ICS system configuration (15).

9. The method (100) of any one of the previous claims, wherein the ICS system configuration (15) is configured across a distributed control system (11), DCS, of the ICS (10) and one or more of: at least one field device (12), at least one edge device (13), and at least one cloud server (14) of the ICS (10).

10. The method (100) of any one of the previous claims, wherein the approval data is obtained after checking approval requirements of the configuration data and/or the ICS system configuration (15) against an approval permission of the at least one approved user (1).

11. The method (100) of any one of the previous claims, wherein the configuration data is indicative of declarative instructions for configuring the system configuration (15) of the ICS (10).

12. The method (100) of any one of the previous claims, wherein the instructions of the configuration data are transformed into computer-executable code by a generative artificial intelligence, GAI, model.

13. The method (100) of any one of the previous claims, wherein the method further comprises logging the ICS system configuration (15) before configuring the ICS system configuration (15) based on the configuration data and the approval data.

14. One or more computer program products comprising instructions which, when executed by one or more data processing apparatuses, cause the one or more data processing apparatuses to carry out the method (100) of any one of the previous claims.

15. A data processing system configured to carry out the method (100) of any one of claims 1 to 13.
